(19) Europäisches Patentamt
European Patent Office
Office européen des brevets

(11) Numéro de publication: **0 191 705**
**B1**

# (12) FASCICULE DE BREVET EUROPEEN

(45) Date de publication du fascicule du brevet: **08.11.89**

(51) Int. Cl.⁴: **C 08 G 63/60**, C 08 G 63/68, C 08 G 63/66

(21) Numéro de dépôt: **86420013.4**

(22) Date de dépôt: **10.01.86**

(54) **Copolyesters aromatiques thermotropes.**

(30) Priorité: **11.01.85 FR 8500552**

(43) Date de publication de la demande:
**20.08.86 Bulletin 86/34**

(45) Mention de la délivrance du brevet:
**08.11.89 Bulletin 89/45**

(84) Etats contractants désignés:
**AT BE CH DE GB IT LI LU NL SE**

(56) Documents cités:
**EP-A- 0 102 160**
**FR-A- 2 400 044**
**US-A- 4 265 802**
**US-A- 4 337 191**
**US-A- 4 536 562**

(73) Titulaire: **RHONE-POULENC CHIMIE, 25, quai Paul Doumer, F-92408 Courbevoie Cédex (FR)**

(72) Inventeur: **Quentin, Jean Pierre, 35, rue Joliot Curie, F-69005 Lyon (FR)**

(74) Mandataire: **Trolliet, Maurice et al, RHONE-POULENC INTERSERVICES Service Brevets Chimie Centre de Recherches de Saint-Fons B.P. 62, F-69192 Saint-Fons Cédex (FR)**

**EP 0 191 705 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne des copolyesters aromatiques thermotropes conformables dérivant d'une part d'au moins une hydroquinone subsitutée (ou un dérivé), d'autre part d'un mélange de diacides carboxyliques aromatiques (ou leurs dérivés) et enfin d'au moins un hydroxyacide carboxylique aromatique (ou un dérivé).

On connaît déjà des polyesters thermotropes dérivant d'une part d'un ou plusieurs diphénols et d'autre part d'un ou plusieurs diacides carboxyliques aromatiques et/ou cycloaliphatiques. Des polyesters de ce genre sont divulgés par exemple dans FR-A 2 270 282 et parmi les polyesters qui y sont décrits, ceux obtenus notamment à partir d'une hydroquinone subsitutée (ou un dérivé), d'acide téréphtalique (ou un dérivé) et de dicarboxy-4,4' diphényléther (ou un dérivé) sont des espèces présentant un intérêt certain. Pour des raisons d'ordre économique touchant au prix éléve des matières premières, la demanderesse a cherché à remplacer une partie des réactifs les plus onéreux, à savoir l'hydroquinone substitutée (ou son dérivé) et le dicarboxy-4,4' diphényléther (ou son dérivé), par un composé du type hydroxyacide moins coûteux et facilement disponible industriellement. Par ailleurs, la demanderesse a cherché à surmonter un inconvénient de ces copolyesters particuliers résidant dans l'obtention de valeurs de propriétés mécaniques insuffisantes qui demandent à être améliorées, notamment les valeurs des modules de torsion et/ou de traction et/ou de flexion et/ou les valeurs de résilience.

Il a maintenant été trouvé que l'on pouvait arriver à la satisfaction de ces objectifs grâce à l'emploi d'au moins un réactif supplémentaire consistant dans l'acide parahydroxybenzoïque ou un dérivé.

Plus précisément, la présente invention concerne des copolyesters aromatiques thermotropes conformables ayant une masse moléculaire élevée dont la valeur minimale correspondant à une viscosité inhérente ègale à 0,3 $dlg^{-3}$, caractérisées par les points suivants:

– ils sont constitués des unités de récurrence de formules: (I); éventuellement (II); (III); (IV); et éventuellement (I'), (I''), (II') et/ou (IV');

(I) désignant la structure:

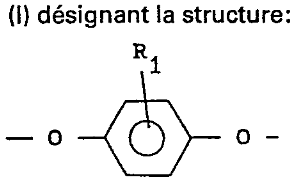

dans laquelle $R_1$ représente un radical méthyle ou éthyle ou un atome de chlore ou de brome, les unités (I) pouvant être identiques ou différentes entre elles,

(II) désignant la structure:

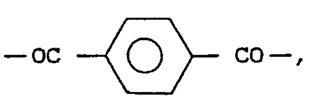

(III) désignant la structure:

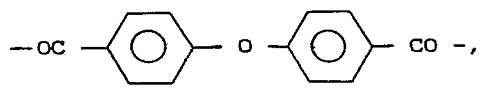

(IV) désignant la structure:

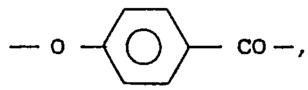

(I') désignant la structure:

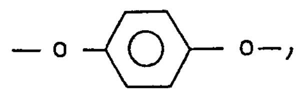

(II'') désignant la structure:

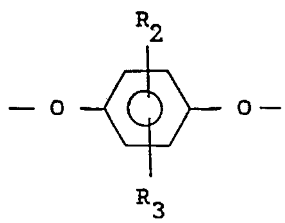 où

$R_2$ et $R_3$ qui peuvent être identiques ou différents, ont chacun la définition donnée ci-avant pour $R_1$, les unités (I'') pouvant être identiques ou différentes entre elles,

(II') désignant la structure:

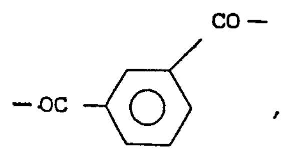 ,

(IV') désignant la structure:

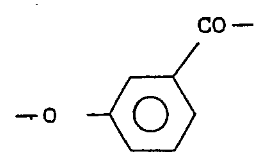 ;

– le rapport molaire de la somme de toutes les unités dioxy par rapport à la somme de toutes les unités dicarbonyle se situe dans l'intervalle allant de 0,95 à 1,05;

– la quantité des unités (II) dans le mélange (II) + (III) se situe dans l'intervalle allant de 0 à 70% en mole et celle des unités (III), par rapport à la même référence, se situe dans l'intervalle allant de 100 à 30% en mole;

– la quantité des unités (IV), exprimée par rapport à la quantité des unités (I), se situe dans l'intervalle allant de 10 à 300% en mole;

– la quantité totale des unités facultatives (I'), (I''), (II') et/ou (IV') est au plus égale à 10% en mole par rapport à la quantité des unités (I);

– et ces copolyesters possèdent une température d'écoulement se situant dans l'intervalle allant de 200 à 350 °C.

Les unités de formule (I) sont issues d'une hydroquinone monosubstitutée (par un radical méthyle ou éthyle ou par un atome de chlore ou de brome) ou de son diester. Il doit être entendu que

les unités (I) peuvent être issues également d'un mélange de deux ou de plus de deux hydroquinones monosubstituées ou de leurs diesters, appartenant au groupe de composés visés dans la présente invention.

Les unités de formule (II) proviennent d'acide téréphtalique ou d'un dérivé comme par exemple un dihalogénure ou un diester.

Les unités de formule (III) proviennent du dicarboxy-4,4' diphényléther ou d'un dérivé comme par exemple un dihalogénure ou un diester.

Les unités de formule (IV) sont issues d'acide parahydroxybenzoïque ou d'un dérivé comme par exemple le composé obtenu par estérification de la fonction phénol ou le composé obtenu par estérification de la fonction acide ou un halogénure de la fonction acide.

Les unités de formule (I') sont issues de l'hydroquinone non substituée ou de son diester.

Les unités de formule (I") sont issues d'une hydroquinone disubstituée ou de son diester ou d'un mélange d'hydroquinones disubstituées ou de leurs diesters.

Les unités de formule (II') sont issues de l'acide isophtalique ou d'un dérivé comme par exemple un dihalogénure ou un diester.

Les unités de formule (IV') sont issues d'acide métahydroxybenzoïque ou d'un dérivé.

Selon un modalité préférentielle, les copolyesters de la présente invention présentent une structure telle que définie ci-avant dans laquelle:

– la quantité des unités (II) dans le mélange (II) + (III) se situe dans l'intervalle allant de 20 à 60% en mole et celle des unités (III), par rapport à la même référence, va de 80 à 40% en mole,

– et la quantité des unités (IV), exprimée par rapport à la quantité des unités (I), se situe dans l'intervalle allant de 30 à 200% en mole.

Parmi les copolyesters aromatiques appartenant à ce groupe préféré, ceux qui conviennent tout particulièrement bien sont les polymères présentant une structure dans laquelle les unités (I) sont identiques, avec le substituant $R_1$ représentant un radical méthyle ou un atome de chlore. De pareilles unités (I) sont issues de méthylhydroquinone ou de chlorohydroquinone ou de leurs diesters.

A propos de la viscosité inhérente, on précisera qu'elle est mesurée à 25 °C sur une solution renfermant 0,5 g de copolyester pour 100 $cm^3$ d'un mélange solvant parachlorophénol/dichloro-1,2 éthane (50/50 en volume). Les copolyesters conformes à la présente invention possèdent une viscosité inhérente au moins égale à 0,3 $dlg^{-1}$; de préférence, ils possèdent une viscosité inhérente au moins égale à 0,5 $dlg^{-1}$ qui peut se situer plus précisément dans l'intervalle allant de 0,5 à 4,0 $dlg^{-1}$.

A propos de la température d'écoulement, elle se situe plus préférentiellement dans l'intervalle allant de 260 à 330 °C. On entend par «température d'écoulement», la température à laquelle les bords d'un échantillon sous forme de copeau de polymère ou de fibre coupée commencent à s'arrondir. Cette température est déterminée par observation visuelle de l'échantillon sur une lamelle couvre-objet pour une vitesse de montée en température appropriée, généralement de l'ordre de 10 à 20 °C minute, observation faite à l'aide d'un microscope équipé d'une platine chauffante connu dans le commerce sous la marque THERMOPAN.

Les copolyesters selon la présente invention présentent la caractéristique importante d'être thermotropes, c'est-à-dire qu'ils sont capables de former des masses fondues anisotropes qui sont faciles à conformer par filage, filmage ou moulage; la thermotropie est facile à mettre en évidence lorsqu'on observe le polymère à l'état fondu dans un système optique équipé de deux polariseurs croisés (90°): il se produit pour les échantillons anisotropes une biréfringence et une transmission de la lumière polarisée à travers les polariseurs croisés. La mise en évidence de l'anisotropie des polyesters selon la présente invention a été effectuée par la méthode thermo-optique TOT décrite dans FR-A 2 270 282.

De ce fait, les masses fondues à l'état anisotrope possèdent une orientation propre et un degré relativement élevé d'organisation qui se retrouvent sur les articles conformés tels que les fils, films et objets moulés leur conférant (déjà à l'état brut) des propriétés améliorées telles que module, ténacité, qu'on n'observe pas habituellement sur les produits bruts isotropes.

Il convient de noter que ces masses fondues anisotropes possèdent une plage d'anisotropie étalée sur au moins 30 °C. On entend par «plage d'anisotropie», l'intervalle de températures qui part de la température à laquelle apparaît la biréfringence et la transmission de la lumière à travers les deux polariseurs croisés et qui se situe audessus de ladite température, intervalle ayant une borne supérieure variable et dans lequel la masse fondue est anisotrope sans aucun risque de décomposition du copolyester.

Les copolyesters selon la présente invention peuvent être mis en forme au moyen de tout procédé connu tel que moulage, filage, filmage et en opérant bien entendu dans la plage d'anisotropie pour donner des articles ayant un bon niveau de propriétés. La présence, dans la structure des copolyesters conformes à la présente invention, des unités mixtes oxy/carbonyle (IV) permet de faire baisser le prix moyen des matières premières et par conséquent de minimiser le coût de production des articles en formes issus de ces copolyesters. Par ailleurs, dans le cas par exemple d'articles moulés, on peut noter (par rapport à ce qui se passe en absence de pareilles unités mixtes) une amélioration sensible des valeurs de certaines propriétés mécaniques, notamment les valeurs des modules de torsion et/ou de traction et/ou de flexion et/ou les valeurs de résilience. On peut noter en outre une meilleure conservation des propriétés mécaniques en fonction de la température.

Il est possible d'augmenter encore les propriétés mécaniques, notamment celles des articles minces, par traitement thermique à température élevée, inférieure à la température de fusion du polymère.

Suivant l'application qui en sera faite, les copolyesters selon l'invention peuvent recevoir des additifs tels que notamment des colorants, des agents de stabilisation contre l'action de la lumière, de l'oxygène et de la chaleur, des charges de remplissage ou de renforcement, des agents ignifugeants.

Les copolyesters conformes à la présente invention peuvent être préparés par différents procédés connus de polymérisation.

Par exemple, ils peuvent être préparés en faisant réagir:

1. la méthyl – et/ou l'éthyl – et/ou la chloro – et/ou la bromohydroquinone, en mélange éventuellement avec un autre (ou d'autres) diphénol(s) consistant dans de l'hydroquinone non substituée et/ou une ou plusieurs hydroquinone(s) disubstituée(s) par les groupes précités, avec

2. éventuellement un dérivé de l'acide téréphtalique pris seul ou en mélange éventuellement avec un dérivé d'un autre diacide carboxylique aromatique consistant dans l'acide isophtalique, et avec

3. un dérivé du dicarboxy-4,4' diphényléther, et avec

4. un dérivé de l'acide parahydroxybenzoïque au niveau de la fonction acide, pris seul ou en mélange éventuellement avec un dérivé du même type d'un autre hydroxyacide aromtique consistant dans l'acide métahydroxybenzoïque,

ledit dérivé d'acide étant soit un halogénure comme par exemple un chlorure, soit un ester d'aryle comme para exemple un ester de phényle, de totyle ou de naphtyle (ledit dérivé étant bien entendu un dihalogénure ou un diester dans la cas d'un diacide carboxylique). La réaction s'effectue en général en présence d'un catalyseur tel que ceux cités dans CA-A 735 543.

Dans ce procédé, les réactifs sont utilisés dans des proportions telles que:

– le rapport molaire diphénol(s)/dérivés de diacides se situe dans l'intervalle allant de 0,95 à 1,05,

– la quantité de dérivé d'acide téréphtalique dans le mélange dérivé d'acide téréphtalique + dérivé du dicarboxy-4,4' diphényléther se situe dans l'intervalle allant de 0 à 70% en mole, et de préférence allant de 20 à 60% en mole,

– la quantité de dérivé d'acide parahydroxybenzoïque se situe dans l'intervalle allant de 10 à 300% en mole par rapport à la quantité d'hydroquinone(s) mono substituée(s), et de préférence allant de 20 à 200% en mole,

– la quantité totale des réactifs engagés autres que le (ou les) hydroquinone(s) monosubstituée(s), le dérivé d'acide téréphtalique, le dérivé de dicarboxy-4,4' diphényléther et le dérivé d'acide parahydroxybenzoïque est au plus égale à 10% en mole par rapport à la quantité d'hydroquinone(s) monosubstitutée(s).

Les copolyesters obtenus d'après ce premier procédé présentent généralement des groupes terminaux d'un côté du type H phénolique et, de l'autre côté, du type halogéno ou aryloxy.

Il est également possible de préparer les copolyesters selon l'invention par estérification directe entre le (ou les) diphénol(s) envisagés, les diacides carboxyliques aromatiques et le (ou les) hydroxyacide(s) aromatique(s). Les copolyesters ainsi obtenus présentent généralement des groupes terminaux du type H phénolique et OH acide.

Mais de préférence, on fait appel à un troisième procédé mettant en œvre une réaction d'acidolyse. Conformément a ce procédé préféré on fait réagir:

1. un diester de méthyl – et/ou d'éthyl – et/ou de chloro – et/ou de bromohydroquinone en mélange éventuellement avec un (ou des) diester(s) d'un autre (ou d'autres) diphénol(s) consistant dans de l'hydroquinone non substituée et/ou une ou plusieurs hydroquinone(s) disubstituée(s) par les groupes précités, avec

2. éventuellement de l'acide téréphtalique pris seul ou en mélange éventuellement avec un autre diacide carboxylique aromatique consistant dans exemple l'acide isophtalique, et avec

3. le dicarboxy-4,4' diphényléther, et avec

4. un ester de l'acide parahydroxybenzoïque au niveau de la fonction phénol, pris seul ou en mélange éventuellement avec un ester du même type d'un autre hydroxyacide aromatique consistant dans l'acide métahydroxybenzoïque,

ledit diester de diphénol et ledit ester d'hydroxyacide au nivenau de la fonction phénol étant formé à partir d'un acide alcanoïque ayant de 2 à 6 atomes de carbone comme par exemple un ester acétique.

La réaction s'effectue en général là aussi en présence d'un catalyseur tel que notamment l'acétate de sodium, de magnésium, de manganèse et de zinc, le titanate de butyle, le trioxyde d'antimoine. Elle débute en général à une température supérieure à 250 °C, puis l'acide formé distille. Après avoir recueilli environ 80% de la théroie d'acide à distiller, on élève progressivement la température jusqu'à une valeur supérieure à 280 °C tout en diminuant progressivement la pression. Lorsque la distillation de l'acide est terminée la polycondensation est continuée sous un vide important pendant une durée pouvant aller jusqu'à 30 minutes.

Dans ce procédé par acidolyse, les réactifs sont utilisés dans des proportions telles que:

– le rapport molaire diester(s) de diphénol(s)/diacides totaux se situe dans l'intervalle allant de 0,95 à 1,05,

– la quantité d'acide téréphtalique dans le mélange acide téréphtalique + dicarboxy-4,4' diphényléther se situe dans l'intervalle allant de 0 à 70% en mole, et de préférence allant de 20 à 60% en mole,

– la quantité d'ester d'acide parahydroxybenzoïque au niveau de la fonction phénol se situe dans l'intervalle allant de 10 à 300% en mole par rapport à la quantité de diester(s) d'hydroquinone(s) monosubstituée(s), et de préférence allant de 30 à 200% en mole,

– la quantité totale des réactifs engagés autres que le (ou les) diester(s) d'hydroquinone(s) monosubstituée(s) l'acide téréphtalique, le dicarboxy-4,4' diphényléther et l'ester de l'acide parahydroxybenzoïque est au plus égale à 10% en mole par rapport à la quantité de diester(s) d'hydroquinone(s) monosubstituée(s).

Les copolyesters obtenus d'après ce troisième procédé présentent généralement des groupes terminaux d'un côte du type alcoxy et, de l'autre côte, du type OH acide.

Les exemples non limitatifs qui suivent montrent comment la présente invention peut être mise on œuvre pratiquement.

Dans ces exemples, un certain nombre de contrôles des copolyesters obtenus sont effectués on indique ci-aprè les modes opératoires et/ou les normes selon lesquels ces contrôles sont effectués:

– Module en torsion:

Il est déterminé à différentes températures au pendule automatique de torsion sous un fréquence de l'ordre de 1 Hertz selon la norme ISO R 537 méthode B, les éprouvettes étant conditionnées à EH 50 selon la norme NF T 51 014. Les résultats sont exprimés en MPa.

– Essai de traction:

La résistance et le module en traction sont mesurés à 23 °C selon les indications de la norme NF T 51 034 sur des éprouvettes de type haltère ayant une largeur de 4 mm et une épaisseur de 2 mm, conditionnées à EH 50. Les résultats sont exprimés en MPa.

– Module en flexion:

Cette détermination est faite à 23 °C selon les indications de la norme NF T 51 001 sur des éprouvettes de type barreau de 80 × 8 × 4 mm, conditionnées à EH 50. Les résultats sont exprimés en MPa.

– Résistance au choc CHARPY:

Elle est déterminée à 23 °C selon des indications de la norme NF T 51 035 sur des éprouvettes de type barreau de 60 × 10 × 4 mm comportant des entailles en U, conditionnées à EH 50. Les résultats sont exprimés en $kJ/m^2$.

Exemple 1:

Dans un réacteur de polycondensation agité et chauffé, muni d'un dispositif de distillation et de balayage par un gaz inerte, on introduit les réactifs et catalyseur suivants:

1. diacétate de méthylhydroquinone: 52,05 g [rapport molaire (1)/(2) + (3) = 1]

2. acide téréphtalique: 16,6 g [40% en mole dans le mélange (2) + (3)]

3. dicarboxy-4,4' diphényléther: 38,7 g [60% en mole dans le mélange (2) + (3)]

4. acide para-acétoxybenzoïque: 27 g [60% en mole par rapport à (1)]

5. acétate de magnésium: 0,067 g [500 ppm].

Le réacteur est purgé à l'azote, puis chauffé par un bain métallique réglé à 265 °C. L'acide acétique commence à distiller après quelques minutes, la première goutte d'acide qui distille correspondant au temps zéro. Après 18 minutes, on recueille 23 $cm^3$ d'acide acétique (62% de la théorie). On élève ensuite progressivement la température du bain métallique jusqu'à 330 °C en 39 minutes; dans le même temps, la pression est diminuée de $1010.10^2$Pa à $13,3.10^2$Pa. On poursuit le chauffage à 300 °C pendant 20 minutes en diminuant la pression jusqu'à $0,39.10^2$Pa pendant le même temps. Le volume total d'acide acétique distillé est de 36 $cm^3$ (soit 97,3% de la théroie).

Le polymère obtenu est blanc et d'aspect fibreux. Il possède une viscosité inhérente de 2,27 $dlg^{-1}$. La température d'écoulement est de 290 °C. La plage d'anisotropie va de 300 °C jusqu'à plus de 360 °C.

Les valeurs du module de torsion en fonction de la température sont indiquées dans le tableau 1 suivant.

Les résultats des mesures de traction, de flexion et de choc sont indiquées dans le tableau 2 suivant.

A propos des éprouvettes moulées permettant de mesurer les propriétés mécaniques elles sont préparées à l'aide d'une presse à vis connue dans le commerce sous la marque KAP. Pour ce faire, le copolyester obtenu est broyé, puis séché 4 heures á 150 °C et les granulés formés sont moulés par injection dans les conditions suivantes:

– température du fondoir: 350 °C

– température du moule: 50 °C

– pression matière d'injection: 22,5 MPa.

A titre d'essai comparatif (essai A), on a reproduit les mêmes opérations que celles décrites ci-avant mais en n'utilisant pas cette fois d'acide para-acétoxybenzoïque. Les réactifs et catalyseur mis en œuvre sont donc les suivants:

1. diacétate de méthylhydroquinone: 52,05 g [rapport molaire: (1)/(2) + (3) = 1]

2. acide téréphtalique: 16,6 g [40% en mole dans mélange (2) + (3)]

3. dicarboxy-4,4' diphényléther: 38,7 g [60% en mole dans mélange (2) + (3)]

4. acétate de magnésium: 0,054 g [500 ppm].

Dans cet essai, un volume de 27 $cm^3$ d'acide acétique est récupéré (soit 94,4% de la théorie). Le polymère obtenu est blanc et d'aspect fibreux. Il possède une viscosité inhérente de 1,78 $dlg^{-1}$. La température d'écoulement est de 280 °C. La plage d'anisotropie va de 280 °C jusqu'à plus de 360 °C.

Tableau 1

| T °C | | −40 | 0 | 20 | 60 | 80 | 100 | 120 | 140 | 180 | 200 |
|---|---|---|---|---|---|---|---|---|---|---|---|
| Module de torsion MPa | Ex. 1 | 1500 | 1200 | 1000 | 800 | 750 | 650 | 480 | 360 | 300 | 280 |
| | Essai A | 1300 | 1100 | 900 | 700 | 600 | 500 | 400 | 200 | 150 | 130 |

Au vu du tableau 1, on constate pour le polymère selon la présente invention une meilleure conservation du module en fonction de la température. Le rapport: module à 20 °C/module à 200 °C est égal à 3,57 pour le polymère de l'exemple 1, alors qu'il est égal à 6,92 pour le polymère de l'essai A.

Exemple 2

Dans le même appareil que celui décrit à l'exemple 1, on introduit:

1. diacétate de méthylhydroquinone: 52,05 g [rapport molaire (1)/(2) + (3) = 1]
2. acide téréphtalique: 16,6 g [40% en mole dans mélange (2) + (3)]
3. dicarboxy-4,4' diphényléther: 38,7 g [60% en mole dans mélange (2) + (3)]
4. acide para-acétoxybenzoïque: 45 g [100% en mole par rapport à (1)]
5. acétate de magnésium: 0,077 g [500 ppm].

On opère ensuite comme indiqué à l'exemple 1. Un volume de 42 $cm^3$ d'acide acétique est récupéré (98% de la théorie). Le polymère obtenu est blanc et d'aspect fibreux. Il possède une viscosité inhérente de 2,15 $dlg^{-1}$. La température d'écoulement est de 290 °C. La plage d'anisotropie va de 300 °C jusqu'à plus de 360 °C. Les résultats des mesures de traction, de flexion et de choc sont indiquées dans le tableau 2 suivant.

Exemple 3:

Dans le même appareil que celui décrit à l'exemple 1, on introduit:

1. diacétate de méthylhydroquinone: 52,05 g [rapport molaire (1)/(2) + (3) = 1]
2. acide téréphtalique: 16,6 g [40% en mole dans mélange (2) + (3)]
3. dicarboxy-4,4' diphényléther: 38,7 g [60% en mole dans mélange (2) + (3)]
4. acide para-acétoxybenzoïque: 67,5 g [150% en mole par rapport à (1)]
5. acétate de magnésium: 0,088 g [500 ppm].

On opère ensuite comme indiqué à l'exemple 1. Un volume de 53 $cm^3$ d'acide acétique est récupéré (95,4% de la théorie). Le polymère obtenu est blanc et d'aspect fibreux. Il possède une viscosité inhérente de 2,25 $dlg^{-1}$. La température d'écoulement est de 300 °C. La plage d'anisotropie va de 300 °C jusqu'à plus de 360 °C. Les résultats des mesures de traction, de flexion et de choc sont indiqués dans le tableau 2 suivant.

Exemple 4:

Dans le même appareil que celui décrit dans l'exemple 1, on introduit:

1. diacétate de méthylhydroquinone: 52,05 g [rapport molaire (1)/(2) + (3) = 1]
2. acide téréphtalique: 16,6 g [40% en mole dans mélange (2) + (3)]
3. dicarboxy-4,4' diphényléther: 38,7 g [60% en mole dans mélange (2) + (3)]
4. acide para-acétoxybenzoïque: 90 g [200% en mole par rapport à (1)]
5. acétate de magnésium: 0,099 g [500 ppm].

On opère ensuite comme indiqué à l'exemple 1. Un volume de 58 $cm^3$ d'acide acétique est récupéré (96,7%e de la théorie). Le polymère obtenu est blanc et d'aspect fibreux. Il possède une viscosité inhérente de 1,81 $dlg^{-1}$. La température d'écoulement est de 310 °C. La plage d'anisotropie va de 315 °C jusqu'à plus de 360 °C. Les résultats des mesures de traction, de flexion et de choc sont indiqués dans le tableau 2 suivant.

Tableau 2

| Exemple /Essai | Traction Résistance MPa | Traction Module MPa | Flexion Module MPa | Choc Charpy kJ/$m^2$ |
|---|---|---|---|---|
| A | 140 | 3330 | 3675 | 27 |
| 1 | 122 | 4470 | 5730 | |
| 2 | 150 | 4920 | 6160 | 28 |
| 3 | 105 | 4800 | 7760 | 31,5 |
| 4 | 76 | 4470 | 7964 | 20,5 |

Exemple 5:

Dans le même appareil que celui décrit dans l'exemple 1, on introduit:

1. diacétate de méthylhydroquinone: 45,7 g [rapport molaire (1)/(2) + (3) = 1]
2. acide téréphtalique: 16,6 g [50% en mole dans mélange (2) + (3)]
3. dicarboxy-4,4' diphényléther: 25,8 g [50% en mole dans mélange (2) + (3)]
4. acide para-acétoxybenzoïque: 12,24g [34% en mole par rapport à (1)]
5. acétate de magnésium: 0,0502 g [500 ppm].

Le réacteur est purgé à l'azote, puis chauffé par un bain métallique réglé à 260 °C pendant 2 heures et 20 minutes. Le volume d'acide acétique distillé est de 22 $cm^3$ (soit 81,5% de la théorie). On élève ensuite progressivement la température du bain métallique jusqu'à 330 °C en 40 minutes, en diminuant dans le même temps la pression de $1010.10^2$Pa à $0,39.10^2$Pa. Après que la distillation d'acide acétique se soit arrêtée, on maintient encore la température de 330 °C et la pression de $0,39.10^2$ pendant 12 minutes 30 secondes. Le volume total d'acide acétique recueilli est de 27 $cm^3$ (soit 100% de la théorie).

Le polymère obtenu est grisâtre et d'aspect fibreux. Il possède une viscosité inhérente de 1,98 $dlg^{-1}$. La température d'écoulement est de 280 °C. La plage d'anisotropie va de 280 °C jusqu'à plus de 360 °C.

Les valeurs des mesures de traction, de flexion et de choc sont indiquées dans le tableau 3 suivant.

Exemple 6:

Dans le même appareil que celui décrit dans l'exemple 1, on introduit:

1. diacétate de méthylhydroquinone: 45,7 g [rapport molaire (1)/(2) + (3) = 1,004]
2. acide téréphtalique: 13,21 g [40% en mole dans mélange (2) + (3)]
3. dicarboxy-4,4' diphényléther: 30,80 g [60% en mole dans mélange (2) + (3)]
4. acide para-acétoxybenzoïque: 48,82 g [135% en mole par rapport à (1)]
5. acétate de magnésium: 0,0693 g [500 ppm].

On opère ensuite comme indiqué à l'exemple 5. Après que la distillation d'acide acétique se soit arrêté, on maintient encore la température de 300 °C et la pression de $0,39.10^2$Pa pendant 8 minutes 45 secondes. Un volume de 37 $cm^3$ d'acide acétique est récupéré (soit 97% de la théorie). Le polymère obtenu est grisâtre et d'aspect fibreux. La température d'écoulement est de 275 °C. La plage d'anisotropie va de 275 °C jusqu'à plus de 360 °C.

Les valeurs des mesures de traction, de flexion et de choc sont indiquées dans le tableau 3 suivant.

Exemple 7:

Dans le même appareil que celui décrit dans l'exemple 1, on introduit:

1. diacétate de chlorohydroquinone: 45,7 g [rapport molaire (1)/(2) + (3) = 0,991]
2. acide téréphtalique: 16,74 g [50% en mole dans mélange (2) + (3)]
3. dicarboxy-4,4' diphényléther: 26,02 g [50% en mole dans mélange (2) + (3)]
4. acide para-acétoxybenzoïque: 22,28 g [62% en mole par rapport à (1)]
5. acétate de magnésium: 0,055 g [500 ppm].

On opère ensuite comme indiqué à l'exemple 5. Après que la distillation d'acide acétique se soit arrêté, on maintient encore la température de 330 °C et la pression de $0,39.10^2$Pa pendant 12 minutes 30 secondes. Un volume de 30 $cm^3$ d'acide acétique est récupéré (soit 100% de la théorie). Le polymère obtenu est grisâtre et d'aspect fibreux. La température d'écoulement est de 290 °C. La plage d'anisotropie va de 290 °C jusqu'à plus de 360 °C.

Les valeurs des mesures de traction, de flexion et de choc sont indiquées dans le tableau 3 suivant.

Exemple 8:

Dans le même appareil que celui décrit dans l'exemple 1, on introduit:

1. diacétate de chlorohydroquinone: 45,7 g [rapport molaire (1)/(2) + (3) = 1,008]
2. acide téréphtalique: 16,46 g [50% en mole dans mélange (2) + (3)]
3. dicarboxy-4,4' diphényléther: 25,58 g [50% en mole dans mélange (2) + (3)]
4. acide para-acétoxybenzoïque: 22,28 g [62% en mole par rapport à (1)]
5. acétate de magnésium: 0,055 g [500 ppm].

On opère ensuite comme indiqué à l'exemple 5. Après que la distillation d'acide acétique se soit arrêtée, on maintient encore la température de 330 °C et la pression de $0,39.10^2$Pa pendant 12 minutes 30 secondes. Un volume de 29 $cm^3$ d'acide acétique est récupéré (soit 96,9% de la théorie). Le polymère obtenu est grisâtre et d'aspect fibreux. Il possède une viscosité inhérente de 2,06 $dlg^{-1}$. La température d'écoulement est de 285 °C. La plage d'anisotropie va de 290 °C jusqu'à plus de 360 °C.

Les valeurs des mesures de traction, de flexion et de choc sont indiqués dans le tableau 3 suivant.

Exemple 9:

Dans le même appareil que celui décrit dans l'exemple 1, on introduit:

1. diacétate de chlorohydroquinone: 45,7 g [rapport molaire (1)/(2) + (3) = 1]
2. acide téréphtalique: 16,6 g [50% en mole dans mélange (2) + (3)]
3. dicarboxy-4,4' diphényléther: 25,8 g [50% en mole dans mélange (2) + (3)]
4. acide para-acétoxybenzoïque: 37,8 g [105% en mole par rapport à (1)]
5. acétate de magnésium: 0,063 g [500 ppm].

On opère ensuite comme indiqué à l'exemple 5. Après la distillation d'acide acétique se soit arrêtée, on maintient encore la température de 330 °C et la pression de $0,39.10^2$Pa pendant 12 minutes 30 secondes. Un volume de 34 $cm^3$ d'acide acétique est récupéré (soit 97,6% de la théorie). Le polymère obtenu est grisâtre et d'aspect fibreux. La température d'écoulement est de 290 °C. La plage d'anisotropie va de 290 °C jusqu'à plus de 360 °C.

Les valeurs des mesures de traction, de flexion et de choc sont indiquées dans le tableau 3 suivant.

Tableau 3

| Exemple | Traction | | Flexion | Choc Charpy |
|---|---|---|---|---|
| | Résistance MPa | Module MPa | Module MPa | kJ/$m^2$ |
| 5 | 102 | 3120 | 6795 | 26,6 |
| 6 | 96 | 2391 | 8361 | 13,4 |
| 7 | 110 | 3240 | 9100 | 13,0 |
| 8 | 95 | 3110 | 8000 | 22,1 |
| 9 | 113 | 2998 | 8560 | 23,3 |

On fera noter que, pour les exemples 5 à 9 précédents, les températures du fondoir de la presse KAP sont les suivantes: exemple 5: 320 °C; exemple 6: 380 °C; exemple 7: 330 °C; exemple 8: 350 °C; exemple 9: 390 °C.

**Revendications pour les états contractants: BE, CH, DE, GB, IT, LI, LU, NL, SE**

1. Copolyesters aromatiques thermotropes conformables ayant une masse moléculaire élevée dont la valeur minimale correspond à une

viscosité inhérente ègale à 0,3 $dlg^{-1}$, caractérisés par les points suivants:

– ils sont constitué des unités de récurrence de formules: (I); éventuellement (II); (III); (IV); et éventuellement (I'), (I''), (II') et/ou (IV');

(I) désignant la structure:

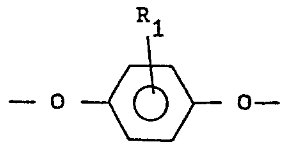

dans laquelle $R_1$ représente un radical méthyle ou éthyle ou un atome de chlore ou de brome, les unités (I) pouvant être identiques ou différentes entre elles,

(II) désignant la structure:

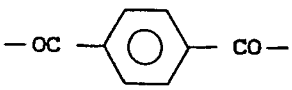,

(III) désignant la structure:

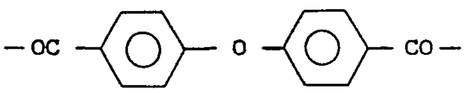,

(IV) désignant la structure:

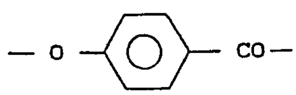,

(I') désignant la structure:

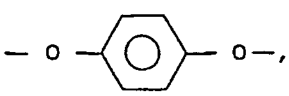,

(I'') désignant la structure:

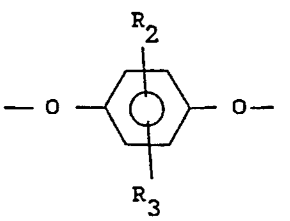 où

$R_2$ et $R_3$ qui peuvent être identiques ou différents, ont chacun la définition donnée ci-avant pour $R_1$, les unités (I'') pouvant être identiques ou différentes entre elles,

(II') désignant la structure:

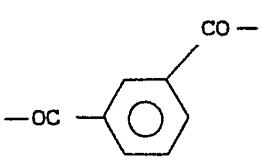,

(IV') désignant la structure:

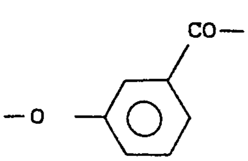;

– le rapport molaire de la somme de toutes les unités dioxy par rapport à la somme de toutes les unités dicarbonyle se situe dans l'intervalle allant de 0,95 à 1,05;

– la quantité des unités (II) dans le mélange (II) + (III) se situe dans l'intervalle allant de 0 à 70% en mole et celle des unités (III), par rapport à la même référence, se situe dans l'intervalle allant de 100 à 30% en mole;

– la quantité des unités (IV), exprimée par rapport à la quantité des unités (I), se situe dans l'intervalle allant de 10 à 300% en mole;

– la quantité totale des unités facultatives (I'), (I''), (II') et/ou (IV') est au plus égale à 10% en mole par rapport à la quantité des unités (I);

– et ces copolyesters possèdent une température d'écoulement se situant dans l'intervalle allant de 200 à 350 °C.

2. Copolyesters selon la revendication 1, caractérisés en ce qu'ils présentent une structure dans laquelle:

– la quantité des unités (II) dans le mélange (II) + (III) se situe dans l'intervalle allant de 20 à 60% en mole et celle des unités (III), par rapport à la même référence, va de 80 à 40% en mole,

– et la quantité des unités (IV), exprimée par rapport à la quantité des unités (I), se situe dans l'intervalle allant de 30 à 200% en mole.

3. Copolyesters selon la revendication 2, caractérisés en ce qu'ils présentent une structure dans laquelle les unités (I) sont identiques, avec le substituant $R_1$ représentant un radical méthyle ou un atome de chlore.

4. Copolyesters selon l'une quelconque des revendications 1 à 3, caractérisés en ce qu'ils possèdent une température d'écoulement se situant dans l'intervalle allant de 260 à 330 °C.

5. Procédé pour l'obtention des copolyesters selon l'une quelconque des revendications 1 à 4, caractérisé par le fait que l'on fait réagir:

1. un diester de méthyl – et/ou d'éthyl – et/ou de chloro – et/ou de bromohydroquinone en mélange éventuellement avec un (ou des) diester(s) d'un autre (ou d'autres) diphénol(s) consistant dans de l'hydroquinone non substituée et/ou une ou plusieurs hydroquinone(s) disubstituée(s) par les groupes méthyles et/ou éthyles et/ou chloro et/ou bromo, avec

2. éventuellement de l'acide téréphtalique pris seul ou en mélange éventuellement avec un autre diacide carboxylique aromatique consistant dans l'acide isophtalique, et avec

3. le dicarboxy-4,4' diphényléther, avec

4. un ester de l'acide parahydroxybenzoïque au niveau de la fonction phénol, pris seul ou en mélange éventuellement avec un ester du même type d'un autre hydroxyacide aromatique consistant dans l'acide métahydroxybenzoïque,

ledit diester de diphénol et ledit ester d'hydroxyacide au niveau de la fonction phénol étant formé à partir d'un acide alcanoïque ayant de 2 à 6 atomes de carbone, les réactifs étant utilisés dans des proportions telles que:

– le rapport molaire diester(s) de diphénol(s)/diacides totaux se situe dans l'intervalle allant de

0,95 à 1,05,

– la quantité d'acide téréphtalique dans le mélange acide téréphtalique + dicarboxy-4,4' diphényléther se situe dans l'intervalle allant de 0 à 70% en mole, et de préférence allant de 20 à 60% en mole,

– la quantité d'ester d'acide parahydroxybenzoïque au niveau de la fonction phénol se situe dans l'intervalle allant de 10 à 300% en mole par rapport à la quantité de diester(s) d'hydroquinone(s), monosubstituée(s) et de préférence allant de 30 à 200% en mole,

– la quantité totale des réactifs engagés autres que le (ou les) diester(s) d'hydroquinone(s) monosubstituée(s), l'acide téréphtalique, le dicarboxy-4,4' diphényléther et l'ester de l'acide parahydroxybenzoïque est au plus égale à 10% en mole par rapport à la quantité de diester(s) d'hydroquinone(s) monosubstituée(s).

6. Articles conformés tels que objets moulés, fils et films issus des copolyesters selon l'une quelconque des revendications 1 à 4.

**Revendications pour l'etat contractant: AT**

1. Procédé pour l'obtention de copolyesters aromatiques thermotropes conformables ayant une masse moléculaire élevée dont la valeur minimale correspond à une viscosité inhérente égale à 0,3 $dlg^{-1}$, caractérisé par le fait que l'on fait réagir:

1. – la méthyl- et/ou l'éthyl- et/ou la chloro- et/ou la bromohydroquinone, en mélange éventuellement avec un autre (ou d'autres) diphénol(s) consistant dans de l'hydroquinone non substituée et/ou une ou plusieurs hydroquinone(s) disubstituée(s) par les groupes méthyles et/ou éthyles et/ ou chloro et/ou bromo,

2. éventuellement avec un dérivé de l'acide téréphtalique pris seul ou en mélange éventullement avec un dérivé d'un autre diacide carboxylique aromatique consistant dans l'acide isophtalique, et avec

3. un dérivé du dicarboxy-4,4' diphényléther, et avec

4. un dérivé de l'acide parahydroxybenzoïque au niveau de la fonction acide, pris seul ou en mélange éventuellement avec un dérivé du même type d'un autre hydroxyacide aromatique consistant dans l'acide métahydroxybenzoïque,

ledit dérivé d'acide étant soit un halogénure, soit un ester d'aryle, ledit dérivé étant bien entendu un dihalogénure ou un diester dans le cas d'un diacide carboxylique, les réactifs étant utilisés dans des proportions telles que:

– le rapport molaire diphénol(s)/dérivés de diacides se situe dans l'intervalle allant de 0,95 à 1,05,

– la quantité de dérivé d'acide téréphtalique dans le mélange dérivé acide téréphtalique + dérivé dicarboxy-4,4' diphényléther se situe dans l'intervalle allant de 0 à 70% en mole, et de préférence allant de 20 à 60% en mole,

– la quantité de dérivé d'acide parahydroxybenzoïque se situe dans l'intervalle allant de 10 à 300% en mole par rapport à la quantité d'hydroquinone(s) monosubstituée(s), et de préférence allant de 30 à 200% en mole,

– la quantité totale des réactifs engagés autres que le (ou les) hydroquinone(s) monosubstituée(s), le dérivé d'acide téréphtalique, le dérivé de dicarboxy-4,4' diphényléther et le dérivé d'acide parahydroxybenzoïque est au plus égale à 10% en mole par rapport à la quantité d'hydroquinone(s) monosubstituée(s).

2. Procédé selon la revendication 1, caractérisé en ce que le dérivé d'acide est soit un chlorure, soit un ester de phényle, de tolyle ou de naphtyle.

3. Procédé pour l'obtention de copolyesters aromatiques thermotropes conformables ayant une masse moléculaire élevée dont la valeur minimale correspond à une viscosité inhérente égale à 0,3 $dlg^{-1}$, caractérisé par le fait que l'on fait réagir:

1. un diester de méthyl – et/ou d'éthyl – et/ou de chloro – et/ou de bromohydroquinone, en mélange éventuellement avec un (ou des) diester(s) d'un autre (ou d'autres) diphénol(s) consistant dans de l'hydroquinone non substituée et/ou une ou plusieurs hydroquinone(s) disubstituée(s) par les groupes méthyles et/ou éthyles et/ou chloro et/ ou bromo, avec

2. éventuellement de l'acide téréphtalique pris seul ou en mélange éventuellement avec un autre diacide carboxylique aromatique consistant dans l'acide isophtalique, et avec

3. le dicarboxy-4,4' diphényléther, et avec

4. un ester de l'acide parahydroxybenzoïque au niveau de la fonction phénol, pris seul ou en mélange éventuellement avec un ester du même type d'un autre hydroxyacide aromatique consistant dans l'acide métahydroxybenzoïque,

ledit diester de diphénol et ledit ester d'hydroxyacide au niveau de la fonction phénol étant formé à partir d'un acide alcanoïque ayant de 2 à 6 atomes de carbone, les réactifs étant utilisés dans des proportions telles que:

– le rapport molaire diester(s) de diphénol(s)/ diacides totaux se situe dans l'intervalle allant de 0,95 à 1,05,

– la quantité d'acide téréphtalique dans le mélange acide téréphtalique + dicarboxy-4,4' diphényléther se situe dans l'intervalle allant de 0 à 70% en mole, et de préférence allant de 20 à 60% en mole,

– la quantité d'ester d'acide parahydroxybenzoïque au niveau de la fonction phénol se situe dans l'intervalle allant de 10 à 300% en mole par rapport à la quantité de diester(s) d'hydroquinone(s), et de préférence allant de 30 à 200% en mole,

– la quantité totale des réactifs engagés autres que le (ou les) diester(s) d'hydroquinone(s) monosubstituée(s), l'acide téréphtalique, le dicarboxy-4,4' diphényléther et l'ester de l'acide parahydroxybenzoïque est au plus égale à 10% en mole par rapport à la quantité de diester(s) d'hydroquinone(s) monosubstituée(s).

4. Application des copolyesters aromatiques conformables préparés selon l'une quelconque des revendications 1 à 3 à la réalisation d'articles conformés tels que objets moulés, fils et films.

**Patentansprüche für die Vertragsstaaten: BE, CH, DE, GB, IT, LI, LU, NL, SE**

1. Verformbare thermotrope aromatische Copolyester mit einer hohen Molekularmasse, deren Minimalwert einer Eigenviskosität gleich 0,3 $dlg^{-1}$ entspricht, gekennzeichnet durch folgende Punkte:

– Sie bestehen aus wiederkehrenden Einheiten der Formeln: (I); gegebenenfalls (II); (III); (IV); und gegebenenfalls (I'); (I"); (II') und/oder (IV'); wobei

(I) die Struktur:

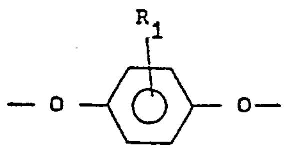

bedeutet, worin

$R_1$ einen Methyl- oder Ethylrest oder ein Chlor- oder Bromatom bedeutet, und die Einheiten (I) untereinander identisch oder verschieden sein können,

(II) die Struktur:

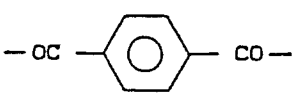

(III) die Struktur:

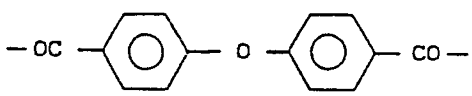

(IV) die Struktur:

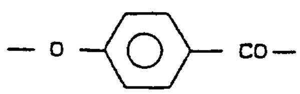

(I') die Struktur:

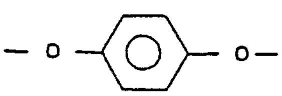

(I") die Struktur

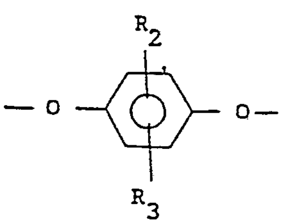

wobei $R_2$ und $R_3$, die identisch oder verschieden sein können, jeweils die oben für $R_1$ gegebene Definition haben und die Einheiten (I") untereinander identisch oder verschieden sein können,

(II') die Struktur:

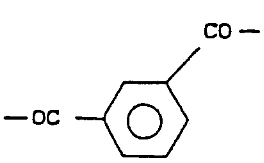

bedeutet,

(IV') die Struktur:

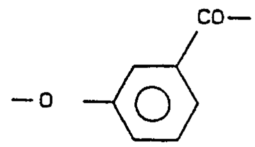

bedeutet,

– das Molverhältnis der Summe aller Dioxyeinheiten in bezug auf die Summe aller Dicarbonyleinheiten liegt im Bereich von 0,95 bis 1,05;

– die Menge der Einheiten (II) in dem Gemisch (II) + (III) liegt in dem Bereich von 0 bis 70 Mol-% und diejenige der Einheiten (III) liegt im Verhältnis auf die gleiche Bezugnahme im Bereich von 100 bis 30 Mol-%;

– die Menge der Einheiten (IV), ausgedrückt im Verhältnis zur Menge der Einheiten (I), liegt im Bereich von 10 bis 300 Mol-%;

– die Gesamtmenge der fakultativen Einheiten (I'), (I"), (II') und/oder (IV') ist höchstens gleich 10 Mol-% im Verhältnis zu der Menge der Einheiten (I);

– und diese Copolyester besitzen eine Fließtemperatur, die im Intervall von 200 bis 350°C liegt.

2. Copolyester gemäß Anspruch 1, dadurch gekennzeichnet, daß sie eine Struktur aufweisen, worin:

– die Menge der Einheiten (II) in dem Gemisch (II) + (III) in dem Intervall von 20 bis 60 Mol-% liegt und diejenige der Einheiten (III) im Verhältnis zu der gleichen Bezugnahme von 80 bis 40 Mol-% geht,

– und die Menge der Einheiten (IV), ausgedrückt im Verhältnis zur Menge der Einheiten (I), in dem Intervall von 30 bis 200 Mol-% liegt.

3. Copolyester gemäß Anspruch 2, dadurch gekennzeichnet, daß sie eine Struktur aufweisen, worin die Einheiten (I) identisch sind, wobei der Substituent $R_1$ einen Methylrest oder ein Chloratom bedeutet.

4. Copolyester gemäß einem der Ansprüche 1 bis 3, dadurch gekennzeichnet, daß sie eine Fließtemperatur besitzen, die in dem Bereich von 260 bis 330° C liegt.

5. Verfahren zur Herstellung der Copolyester gemäß einem der Ansprüche 1 bis 4, dadurch gekennzeichnet, daß man umsetzt:

1. einen Methyl- und/oder Ethyl- und/oder Chlor- und/oder Bromhydrochinondiester im Gemisch mit gegebenenfalls einem Diester oder Diestern eines anderen oder anderer Diphenols/Diphenole, bestehend aus nicht-substituiertem Hydrochinon und/oder einem oder mehreren Hydrochinon(en), das bzw. die durch Methyl- und/oder Ethyl- und/oder Chlor- und/oder Bromgruppen, disubstituiert ist/sind, mit
2. gegebenenfalls Terephthalsäure, allein oder im Gemisch, gegebenenfalls mit einer anderen aromatischen Dicarbonsäure, bestehend aus Isophthalsäure, und mit
3. 4,4'-Dicarboxydiphenylether und mit
4. einem Ester der Parahydroxybenzoesäure an der Phenolfunktion, allein oder im Gemisch gegebenenfalls mit einem Ester vom selben Typ einer

anderen aromatischen Hydroxysäure, bestehend aus Metahydroxybenzoesäure,

wobei der genannte Diphenoldiester und der genannte Hydroxysäureester an der Phenolfunktion gebildet ist, ausgehend von einer Alkansäure mit 2 bis 6 Kohlenstoffatomen, wobei die Reaktionskomponenten in solchen Mengenverhältnissen verwendet werden, daß:

– das Molverhältnis Diphenoldiester/Dicarbonsäuren insgesamt im Bereich von 0,95 bis 1,05 liegt,

– die Menge Terephthalsäure in dem Gemisch Terephthalsäure + 4,4'-Dicarboxydiphenylether in dem Bereich von 0 bis 70 Mol-% und vorzugsweise von 20 bis 60 Mol-% liegt,

– die Menge Parahydroxybenzoesäureester auf der Ebene der Phenolfunktion im Bereich von 10 bis 300 Mol-% im Verhältnis zur Menge monosubstituiertem/monosubstituierten Hydrochinondiester(n) und vorzugsweise von 30 bis 200 Mol-% liegt,

– die Gesamtmenge der eingesetzten Reagentien anders als der (oder die) monosubstituierte(n) Hydrochinondiester, Terephthalsäure, 4,4'-Dicarboxydiphenylether und Ester der Parahydroxybenzoesäure höchstens gleich 10 Mol-% im Verhältnis zur Menge monosubstituiertem(n) Hydrochinondiester(n) beträgt.

6. Geformte Erzeugnisse wie Formteile, Fäden und Filme, ausgehend von den Copolyestern gemäß einem der Ansprüche 1 bis 4.

**Patentansprüche für den Vertragsstaat AT**

1. Verfahren zur Herstellung von verformbaren thermotropen aromatischen Copolyestern mit einer hohen Molekularmasse, deren Minimalwert einer Eigenviskosität gleich 0,3 $dlg^{-1}$ entspricht, dadurch gekennzeichnet, daß man reagieren läßt:

1. Methyl- und/oder Ethyl- und/oder Chlor- und/oder Bromhydrochinondiester im Gemisch gegebenenfalls mit einem anderen (oder anderen) Diphenol(en), bestehend aus nicht-substituiertem Hydrochinon und/oder einem oder mehreren Hydrochinon(en), die durch Methyl- und/oder Ethyl- und/oder Chlor- und/oder Bromgruppen, disubstituiert ist/sind,

2. gegebenenfalls ein Derivat der Terephthalsäure, allein genommen oder im Gemisch gegebenenfalls mit einem Derivat einer anderen aromatischen Dicarbonsäure, bestehend aus Isophthalsäure, und mit

3. einem Derivat des 4,4'-Dicarboxydiphenylethers und mit

4. einem Derivat der Parahydroxybenzoesäure auf der Ebene der Säurefunktion, allein genommen oder im Gemisch gegebenenfalls mit einem Derivat desselben Typs einer anderen aromatischen Hydroxysäure, bestehend aus Metahydroxybenzoesäure,

wobei dieses Säurederivat entweder ein Halogenid oder ein Arylester ist und dieses Derivat ein Dihalogenid oder ein Diester im Falle einer Dicarbonsäure ist, wobei die Reaktanten in solchen Mengenverhältnissen angewandt werden, daß:

– das Molverhältnis Diphenol(e)/Derivate der Disäure im Bereich von 0,95 bis 1,05 liegt,

– die Menge an Terephthalsäurederivat in dem Gemisch Terephthalsäurederivat + Derivat des 4,4'-Dicarboxydiphenylethers in dem Bereich von 0 bis 70 Mol-% und vorzugsweise von 20 bis 60 Mol-% liegt,

– die Menge an Parahydroxybenzoesäurederivat in dem Bereich von 10 bis 300 Mol-% im Verhältnis zu der Menge an monosubstituiertem(n) Hydrochinon(en) und vorzugsweise von 30 bis 200 Mol-% liegt,

– die Gesamtmenge der eingesetzten Reaktanten, außer dem (oder den) monosubstituierten Hydrochinon(en), dem Terphthalsäurederivat, dem 4,4'-Dicarboxydiphenyletherderivat und dem Parahydroxybenzoesäurederivat, höchstens gleich 10 Mol-% im Verhältnis zu der Menge an monosubstituiertem(n) Hydrochinon(en) ist.

2. Verfahren gemäß Anspruch 1, dadurch gekennzeichnet, daß das Säurederivat entweder ein Chlorid oder ein Phenyl-, Tolyl- oder Napthylester ist.

3. Verfahren zur Herstellung von verformbaren thermotropen aromatischen Copolyestern mit einer hohen Molekularmasse, deren Minimalwert einer Eigenviskosität gleich 0,3 $dlg^{-1}$ entspricht, dadurch gekennzeichnet, daß man zur Reaktion bringt:

1. einen Methyl- und/oder Ethyl- und/oder Chlor- und/oder Bromhydrochinondiester im Gemisch eventuell mit einem Diester oder Diestern eines anderen (oder anderer) Diphenols(e), bestehend aus nicht-substituiertem Hydrochinon und/oder einem oder mehreren Hydrochinon(en), der/die durch Methyl- und/oder Ethyl- und/oder Chlor- und/oder Bromgruppen, disubstituiert ist/sind, mit

2. gegebenenfalls Terephthalsäure allein oder im Gemisch gegebenenfalls mit einer anderen aromatischen Dicarbonsäure, bestehend aus Isophthalsäure, und mit

3. 4,4'-Dicarboxydiphenylether und mit

4. einem Ester der Parahydroxybenzoesäure auf Ebene der Phenolfunktion, allein oder im Gemisch gegebenenfalls mit einem Ester desselben Typs einer anderen aromatischen Hydroxysäure, bestehend aus Metahydroxybenzoesäure,

wobei dieser Diphenoldiester und dieser Hydroxysäureester auf Ebene der Phenolfunktion gebildet wird ausgehend von einer Alkansäure mit 2 bis 6 Kohlenstoffatomen, wobei die Reaktanten in solchen Mengenverhältnissen verwendet werden, daß

– das Molverhältnis Diester des/der Diphenols(e)/Disäuren insgesamt im Bereich von 0,95 bis 1,05 liegt.

– die Menge Terephthalsäure in dem Gemisch Terephthalsäure + 4,4'-Dicarboxydiphenylether in dem Bereich von 0 bis 70 Mol-% und vorzugsweise in dem Bereich von 20 bis 60 Mol-% liegt,

– die Menge Parahydroxybenzoesäureester auf Ebene der Phenolfunktion im Bereich von 10 bis 300 Mol-% im Verhältnis zur Menge des/der monosubstituierten Diester(s) von Hydrochinon(en)

und vorzugsweise im Bereich von 30 bis 200 Mol-% liegt,

– die Gesamtmenge der eingesetzten Reaktanten, außer dem (oder den) monosubstituierten Diester(n) des/der Hydrochinons(e), der Terephthalsäure, des 4,4'-Dicarboxydiphenylethers und des Esters der Parahydroxybenzoesäure höchstens gleich 10 Mol-% ist, im Verhältnis zur Menge des/der monosubstituierten Diester(s) des/der Hydrochinons(e).

4. Verwendung der verformbaren aromatischen Copolyester, hergestellt gemäß einem der Ansprüche 1 bis 3, zur Herstellung von geformten Erzeugnissen wie Formteilen, Fäden und Filmen.

**Claims for the Contracting States: BE, CH, DE, GB, IT, LI, LU, NL, SE**

1. Thermotropic aromatic copolyesters capable of being shaped and having a high molecular mass, the minimum value of which corresponds to an inherent viscosity of 0.3 dl $g^{-1}$, characterized by the following points:

– they consist of repeat units of formulae: (I); optionally (II); (III): (IV); and optionally (I'); (I''); (II') and/or (IV');

(I) denoting the structure:

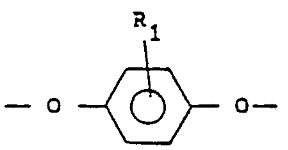

in which $R_1$ denotes a methyl or ethyl radical or a chlorine or bromine atom, it being possible for the units (I) to be identical or different from each other,

(II) denoting the structure:

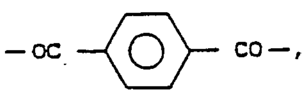

(III) denoting the structure:

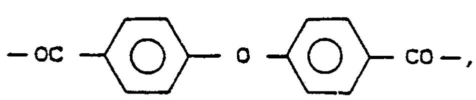

(IV) denoting the structure:

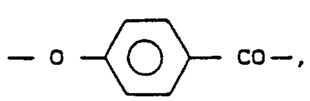

(I') denoting the structure:

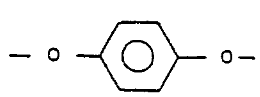

(I'') denoting the structure:

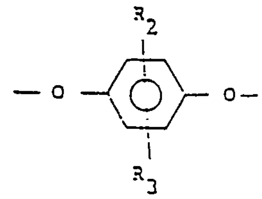

where

each of $R_2$ and $R_3$, which may be identical or different, has the definition given above for $R_1$, it being possible for the units (I'') to be identical or different from each other,

(II') denoting the structure:

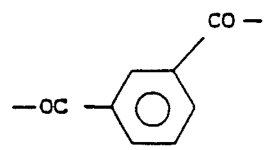

,

(IV') denoting the structure:

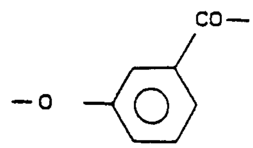

;

– the molar ratio of the sum of all the dioxy units relative to the sum of all the dicarbonyl units lies in the range from 0.95 to 1.05;

– the quantity of the units (II) in the mixture (II) + (III) lies in the range from 0 to 70 mol% and that of the units (III), relative to the same reference, lies in the range from 100 to 30 mol%;

– the quantity of the units (IV) expressed relative to the quantity of the units (I), lies in the range from 10 to 300 mol%;

– the total quantity of the optional units (I'), (I''), (II') and/or (IV') does not exceed 10 mol% relative to the quantity of the units (I);

– and these copolyesters have a flow temperature lying in the range from 200 to 350 °C.

2. Copolyesters according to claim 1, characterized in that they have a structure in which

– the quantity of the units (III) in the mixture (II) + (III) lies in the range from 20 to 60 mol% and that of the units (II), relative to the same reference, runs from 80 to 40 mol%, and

– the quantity of the units (IV), expressed relative to the quantity of the units (I), lies in the range from 30 to 200 mol%.

3. Copolyesters according to claim 2, characterized in that they have a structure in which the units (I) are identical, with the substituent $R_1$ denoting a methyl radical or a chlorine atom.

4. Copolyesters according to any one of claims 1 to 3, characterized in that they have a flow temperature lying in the range from 260 to 330 °C.

5. Process for obtaining copolyesters according to any one of claims 1 to 4, characterized in that the following are reacted:

1. a diester of methyl- and/or ethyl- and/or chloro- and/or bromohydroquinone optionally

mixed with one (or more) diester(s) of another (or of other) diphenol(s) consisting of unsubstituted hydroquinone and/or one or more hydroquinone(s) disubstituted by methyl and/or ethyl and/or chloro and/or bromo groups, with

2. optionally, terephthalic acid taken by itself or optionally mixed with another aromatic dicarboxylic acid consisting of isophthalic acid, and with

3. 4,4'-dicarboxydiphenyl ether and with

4. a para-hydroxybenzoic acid ester formed by the phenol functional group, taken by itself or optionally mixed with an ester of the same type of another aromatic hydroxyacid consisting of meta-hydroxy-benzoic acid,

the said diphenol diester and the said hydroxyacid ester formed by the phenol functional group being formed with an alkanoic acid containing from 2 to 6 carbon atoms, the reactants being employed in proportions such that:

– the molar ratio diester(s) of diphenol(s)/total diacids lies in the range from 0.95 to 1.05,

– the quantity of terephthalic acid in the mixture of terephthalic acid + 4,4'-dicarboxydiphenyl ether lies in the range from 0 to 70 mol% and preferably from 20 to 60 mol%,

– the quantity of para-hydroxybenzoic acid ester formed by the phenol functional group lies in the range from 10 to 300 mol% relative to the quantity of diester(s) of monosubstituted hydroquinone(s), and preferably from 30 to 200 mol%,

– the total quantity of the reactants used, other than the diester(s) of monosubstituted hydroquinone(s), terephthalic acid, 4,4'-dicarboxydiphenyl ether and the para-hydroxybenzoic acid ester does not exceed 10 mol% relative to the quantity of diester(s) of monosubstituted hydroquinone(s).

6. Shaped articles such as moulded objects, yarns and films resulting from the copolyesters according to any one of claims 1 to 4.

**Claims for the Contracting State: AT**

1. Process for obtaining thermotropic aromatic copolyesters capable of being shaped and having a high molecular mass, the minimum value of which corresponds to an inherent viscosity of 0.3 dl $g^{-1}$, characterized by the following are reacted:

1. methyl- and/or ethyl- and/or chloro- and/or bromohydroquinone optionally mixed with another (or other) diphenol(s) consisting of unsubstituted hydroquinone and/or one or more hydroquinone(s) disubstituted by methyl and/or ethyl and/or chloro and/or bromo groups,

2. optionally, a derivative of terephthalic acid taken by itself or optionally mixed with a derivative of another aromatic dicarboxylic acid consisting of isophthalic acid, and with

3. a derivative of 4,4'-dicarboxydiphenyl ether, and with

4. a derivative of para-hydroxybenzoic acid formed by the acid functional group, taken by itself or optionally mixed with a derivative of the same time of another aromatic hydroxyacid consisting of metahydroxybenzoic acid,

the said acid derivative being either a halide or an aryl ester, the said derivative being of course a dihalide or a diester in the case of a dicarboxylic acid, the reactants being employed in proportions such that:

– the molar ratio diphenol(s)/diacid derivatives lies in the range from 0.95 to 1.05,

– the quantity of terephthalic acid derivative in the mixture of terephthalic acid + derivative of 4,4'-dicarboxydiphenyl ether lies in the range from 0 to 70 mol% and preferably from 20 to 60 mol%,

– the quantity of para-hydroxybenzoic acid derivative lies in the range from 10 to 300 mol% relative to the quantity of monosubstituted hydroquinone(s), and preferably from 30 to 200 mol%,

– the total quantity of the reactants used, other than the monosubstituted hydroquinone(s), the terephthalic acid derivative, the derivative of 4,4'-dicarboxydiphenyl ether and the para-hydroxybenzoic acid derivatives does not exceed 10 mol% relative to the quantity of monosubstituted hydroquinone(s).

2. Process according to claim 1, characterized in that the acid derivative is either a chloride or a phenyl, tolyl or naphthyl ester.

3. Process for obtaining thermotropic aromatic copolyesters capable of being shaped and having a high molecular mass, the minimum value of which corresponds to an inherent viscosity of 0.3 dl $g^{-1}$, characterized by the fact that the following are reacted:

1. a diester of methyl- and/or ethyl- and/or chloro- and/or bromohydroquinone optionally mixed with one (or more) diester(s) of another (or of other) diphenol(s) consisting of unsubstituted hydroquinone and/or more hydroquinone(s) disubstituted by methyl and/or ethyl and/or chloro and/or bromo groups, with

2. optionally, terephthalic acid taken by itself or optionally mixed with another aromatic dicarboxylic acid consisting of isophthalic acid, and with

3. 4,4'-dicarboxydiphenyl ether and with

4. a para-hydroxybenzoic acid ester formed at the phenol functional group, taken by itself or optionally mixed with an ester of the same type of another aromatic hydroxyacid consisting of meta-hydroxy-benzoic acid,

the said diphenol diester and the said hydroxyacid ester formed by the phenol functional group being formed with an alkanoic acid containing from 2 to 6 carbon atoms, the reactants being employed in proportions such that:

– the molar ratio diester(s) of diphenol(s)/total diacids lies in the range from 0.95 to 1.05,

– the quantity of terephthalic acid in the mixture terephthalic acid + 4,4'-dicarboxydiphenyl ether lies in the range from 0 to 70 mol% and preferably from 20 to 60 mol%,

– the quantity of para-hydroxybenzoic acid ester formed by the phenol functional group lies in the range from 10 to 300 mol% relative to the quantity

of diester(s) of monosubstituted hydroquinone(s), and preferably from 30 to 200 mol%,

– the total quantity of the reactants used, other than the diester(s) of monosubstituted hydroquinone(s), terephthalic acid, 4,4'-dicarboxydiphenyl ether and the para-hydroxybenzoic acid ester does not exceed 10 mol% relative to the quantity of diester(s) of monosubstituted hydroquinone(s).

4. Application of the aromatic copolyesters capable of being shaped, prepared according to any one of claims 1 to 3, to the production of shaped articles such as moulded objects, yarns and films.